# EUROPEAN PATENT SPECIFICATION

(11) **EP 2 107 706 B1**
(45) Date of publication and mention of the grant of the patent: **25.09.2013**
(21) Application number: 08153932.2
(22) Date of filing: 02.04.2008
(51) Int. Cl.: H04L 1/00

(54) **A receiver and a method for mobile communication**
Empfänger und Verfahren für die mobile Kommunikation
Récepteur et procédé de communication mobile

(43) Date of publication of application: 07.10.2009
(73) Proprietor: Telefonaktiebolaget LM Ericsson (publ), 164 83 Stockholm (SE)
(72) Inventor: Lindoff, Bengt, SE-237 36 Bjärred (SE); Rosenqvist, Anders, SE-247 33 Södra sandby (SE)
(74) Representative: Åkerman, Mårten Lennart

(56) References cited:
- EP-A- 1 028 540
- WO-A-01/28106
- US-A- 5 796 760
- US-A- 5 943 362
- US-A1- 2003 152 167

## Description

### Technical field

The present invention relates to a method and a receiver for receiving and processing a communications signal in a mobile communications system.

### Background

Within cellular wireless communication systems, such as Code Division Multiple Access (CDMA) systems, there is a trend towards higher and higher peak data rates, most pronounced at present in the downlink from a base station to e.g. a cellular phone or to a PC data card. As an example the High Speed Packet Access (HSPA) Evolution track of Wideband CDMA (WCDMA) is designed to provide dramatically increased data rates by e.g. more complex modulation schemes.

When using such a more complex modulation scheme, e.g. 16QAM (4 bits per data symbol) or 64QAM (6 bits per data symbol), instead of the less complex QPSK (2 bits per data symbol), it is possible to represent a greater number of data bits per data symbol and thus increase the data rate per data stream at a fixed data symbol rate.

However, when using more complex modulation schemes, the data symbols reconstructed by the receiver (also called "soft values") need to be more free from errors to not increase the risk of decoding errors, this in turn meaning that a higher Signal-to-Interference-plus-Noise-Ratio (SINR) at the receiver is needed and that analog components and/or hardware blocks in the receiver need to work closer to ideal performance to lower the radio frequency (RF) impairments or error vectors caused by the receiver.

Tougher SINR requirements in turn mean a need for better/steeper filters in the receiver, transmitter diversity with more transmitters (TX) antennas, receiver (RX) diversity with more antennas, more complicated mathematical receiver models, more complicated RX processing with possibly a larger number of despreaders, combiners etc in the receiver.

It is expected that the increased data rates will be achievable in "good conditions," where the propagation channel-induced interference and interference from other external sources is low. In these cases the RF impairments, or error vectors, are expected to become the limiting factors and cause error floors and/or throughput ceilings.

These RF impairments or error vectors are particularly troublesome since their impact cannot be removed by means of power allocation or interference coordination by the network. Some typical causes for RF impairments or error vectors are thermal noise in transistors and other analog components, frequency errors or frequency jitter in clock oscillators and clock processing/propagating parts, unintended nonlinearities in mixers, component variations in analog filters, gain errors, phase errors and/or quantization errors in analog-to-digital (A/D)) converters.

Simply improving the quality of the individual components in the RF circuitry in order to decrease the effects of these impairments increase the cost considerably and is not always a practical alternative.

US 5 796 760 describes a receiver for multi-path signals having a number of identical processing or communications paths. In each channel the received signal is processed with an amount of expected delay for the signal being processed by that channel. In this way the differently delayed multipath signals are being aligned before they are weighed and combined in a ratio combiner to achieve a received signal of larger amplitude.

### Summary

A method for receiving a communications signal in a mobile communications system is presented which can reduce the effects of at least some of the receiver noise components on detected single data streams.

In this method, a communications signal is received by N antenna(s) to produce N first data stream(s). The N first data stream(s) are processed to produce at least N second data streams, and at least one copy of at least one of the N first data streams is processed in parallel to the processing of the N first data streams, to produce at least one additional second data stream. The at least one additional second data stream is combined with the respective second data stream produced by the processing of the at least one of the N first data streams.

A receiver is also presented which is adapted to receive N first data stream(s) from N antennas. The receiver has N pre-combining processing unit(s) for processing the N data stream(s) to produce at least N second data stream(s). The receiver also has at least one additional pre-combining processing unit which is adapted to process at least one copy of at least one of the N data stream(s), in parallel to the processing of the N first data streams, to produce at least one additional second data stream. The receiver is further provided with a combining unit which is adapted to combine the at least one additional second data stream with the respective second data stream produced by the processing of the at least one of the N first data streams.

Further, a method of receiving and processing a communications signal in a mobile communications system is presented wherein the communications signal is receiving by N antenna(s) to produce N first data stream(s), and wherein the the N first data streams are processed by N pre-combining processing units if an estimate of channel quality is below a threshold value, and by M pre-combining processing units, wherein M>N, if the estimate of channel quality is above a threshold value.

A corresponding receiver is also presented which is adapted to receive N first data stream(s) from N antenna(s) and which comprises M pre-combining processing units, wherein M>N, and a control unit adapted to use an estimate of channel quality to control processing of the N first data stream(s) so that M pre-combining processing units are used for processing the N data streams if an estimate of channel quality is above a threshold value, and so that N of the M pre-combining processing units are used for processing the N data streams if the estimate of channel quality is below a threshold value.

### Brief description of the drawings

The invention will be described more fully below with reference to the drawings, in which,

Fig. 1 is a schematic view of a transmitter and receiver arrangement.

Fig. 2 shows a receiver according to embodiments of the invention.

Fig. 3 shows a WCDMA/HSPA receiver according to embodiments of the invention.

Fig. 4 shows a receiver according to embodiments of the invention.

Fig 5 shows a flowchart for a method according to embodiments of the invention.

Fig 6 shows a flowchart for a method according to embodiments of the invention

### Detailed description

To facilitate an understanding of exemplifying embodiments of the invention, many aspects are described in terms of sequences of actions that can be performed by elements of a computer system. For example, it will be recognized that in each of the embodiments, the various actions can be performed by specialized circuits or circuitry (e.g., discrete logic gates interconnected to perform a specialized function), by program instructions being executed by one or more processors, or by a combination of both.

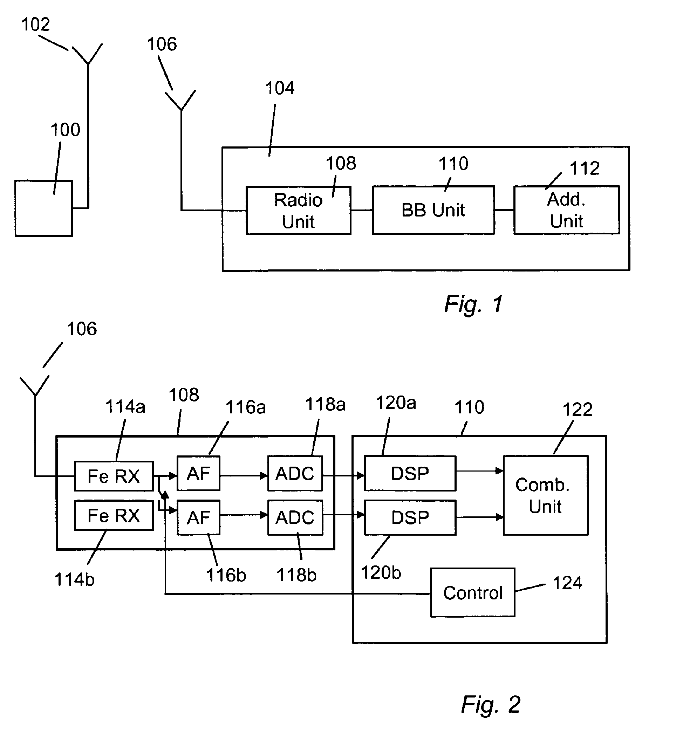

In Fig. 1 a transmitter 100 is shown, which, via a transmitter antenna 102, transmits a signal. A receiver 104 receives the signal via a receiver antenna 106. In the receiver 104, the signals received by the antenna are first processed by a radio front end (RF) unit 108, then by a baseband (BB) unit 110 and then possibly by some additional unit 112.

The radio unit 108 and the baseband unit 110 can comprise at least two parallel processing chains. It may also be the case that only the radio unit or only the baseband unit or only parts of either one of these comprise parallel processing chains.

In Fig. 2 an embodiment of the invention is shown, wherein the receiver is equipped with N antennas, in the Fig. 2 case N=1, i.e. the receiver has a single antenna, and M receiver chains, in this case M=2, in the RF and BB unit, i.e. the RF and BB units might have been originally designed to be capable of supporting receive (RX) diversity. Briefly, RX diversity means that a receiver has more than one antenna and a corresponding receiver chain for each antenna.

The Fig. 2 case could for instance be valid when the RF and BB units were designed for use in a so called high end terminal, i.e. a terminal in the higher price range having many different features. In the Fig. 2 embodiment the dual processing chains are instead used to provide what could be denoted as electronics diversity, i.e. the diversity gain is achieved by using more RX branches than receiver antennas.

In the radio unit 108 in Fig. 2 the analog baseband signal is received by one of the front end receivers 114a and 114b, in Fig. 2 the front end receiver 114a is used. The signal is then fed to a first and a second branch and analog filtered in analog filters (AF) 116a and 116 b, and analog-to-digital (AD) converted in AD converters (ADC) 118a and 118b.

In Fig 2, for sake of clarity, two lines are shown representing data streams from the radio unit 108 to the BB unit 110. These data streams may be multiplexed onto a single stream.

In the BB unit 110 the AD converted base band signals from the radio unit are processed by digital signal processors (DSP) 120a and 120b and the resulting digital signals are combined in some manner in a combining unit 122. The combining may be e.g. an addition or averaging operation.

Thus, a method according to embodiments of the invention may be described as receiving the communications signal by a number N - in Fig. 2, N equals one - of antennas 106 to produce N data streams, and then processing the N data streams in a radio unit 108, wherein at least part of the processing in the radio unit 108 is performed in parallel by a number M of parallel processing chains, wherein M is larger than N. In the Fig. 2 example, M equals two.

Further, as has been described above, the radio unit 108 produces a number M of digitized data streams which are further processed in a baseband unit 110, wherein in turn at least part of the processing may be performed in parallel..

Returning to Fig. 2, a control unit 124, which in this embodiment is located in the BB unit 110, may determine whether N - in the Fig. 2 case one - or M - in the Fig. 2 case two - receiver branches should be used. The decision on how many branches to use could be made based on the current radio scenario, type of service (voice, streaming video etc) etc. As an example, the input SNR could be used. This may for instance be represented by a Channel Quality Indicator (CQI) value, which is derived in a channel estimation unit.

It may be noted that if the input SNR is low, the gain of reducing the RF impairment noise, i.e. the error vectors, using the electronic diversity, may be small, since the input SNR at the antenna is the dominating impairment. In this case a decision that more receiver branches should not be used can be made in order to reduce the current consumption. On the other hand, if the input SNR at the antenna is high, the RF impairments or error vectors (EV) are a dominant contributor to the noise and therefore a decision can be made to use a larger number of receiver branches to make it possible to achieve electronics diversity gain over the RF impairment noise, compared to using only one receiver branch per antenna.

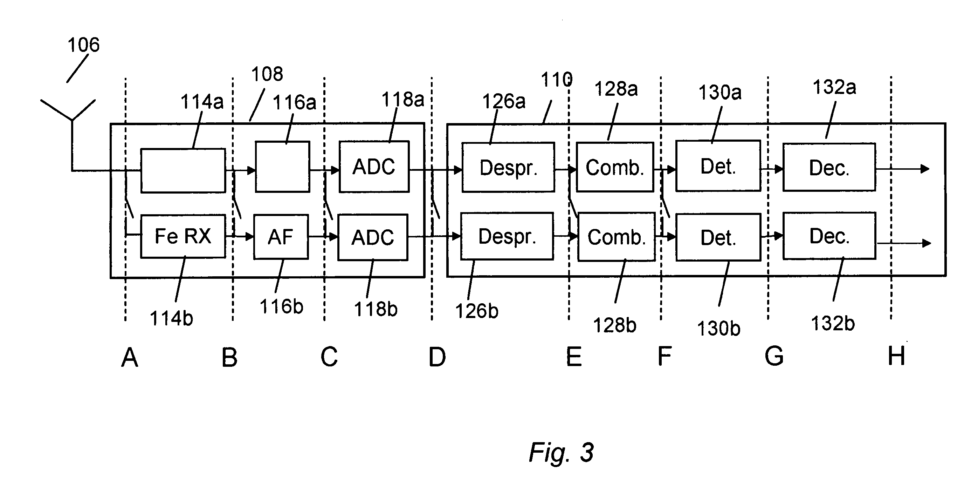

There are a number of choices for where to start and end the parallell processing of data streams in the receiver. With reference to Fig. 3 a more detailed description applicable to a receiver used for WCDMA or HSPA will now follow.

In the receiver in Fig. 3 capital letters A-H are used for denoting different start and end points of the parallel processing. In this example, the receiver is to detect a single digital data stream. However, the receiver is equipped with two parallel signal processing chains throughout all of the analog (between A and D) and digital (between D and H) parts. In the analog baseband receiver noise components are added to the desired signals due to RF imperfections. In the digital baseband reciever noise components may be added as quantization and timing errors, due to e.g. fixed point implementations in the digital baseband.

As a first example, parallel processing may take place between A and F. At A, the signal from the receiver antenna 106 is fed as two copies, one to each of the front end receivers (Fe RX) 114a and 114b.

Due to impedance problems that may be too expensive to solve, it may not be possible to feed the signal from the single receiver antenna 106 to both front end receivers 114a and 114b. Instead the parallel processing may begin after one of the front end receivers 114a or 114b at B.

The signal is then processed by analog filters 116a and 116b and AD converters 118a and 118b. At D, the two digitized copies of the partly processed signal have now been exposed to two different sets of error vectors or receiver noise components. The noise and imperfections introduced between stage B and D are partly independent and hence give rise to corresponding noise components that could be treated statistically.

Between D and E, the two digitized copies may be fed to two despreading units 126a and 126b comprising a set of despreaders each. In each set of despreaders, signals corresponding to different delays are regained from each digitized copy of the signal.

The outputs from a set of despreaders are commonly denoted fingers. Each delay usually corresponds to a single finger. Between E and F, the fingers from both despreading units 126a and 126b may be combined in a single combiner. Or, as is shown in Fig. 3, two separate combiners 128a and 128b may be used.

If only a single common combiner is used, a common stream is generated, which in turn is detected by a detector and then fed to a decoder. If two separate combiners 128a and 128b are used, two separate streams of soft values are produced. These are then detected separately in detectors 130a and 130a and decoded in decoders 132a and 132b and thereafter combined.

Further, another possible point for beginning the parallel processing is C, implying that the noise components of the A/D-converters would exist in partly independent versions.

Beginning the parallel processing at D could be less useful, since then all the analog error vector sources have been passed. However, there may be sources of error also in the digital baseband part of the receiver, such as quantization errors caused by fixed point implementation and timing errors. Hence it may also be advantageous to start the parallel processing after the analog part.

In addition to varying the point for starting the parallel processing, there are different possible points for ending the parallel processing.

In theory, the point for ending the parallel processing could be anywhere from B to H. If the parallell processing ends at G, as is mentioned above, it means that each combiner 128a and 128b generates its own stream of soft values. Somewhere between F and G these soft values may be statistically treated and a single stream of detected symbols be produced at G.

It would also be possible to average the two digitized copies at D and feed the averaged digitized signal to only one of the baseband chains. Other combinations are also possible.

It may be noted that if the receiver performs any digital processing in order to reduce the effects of IQ-imbalance, this processing could be performed separately for each of the analog copies of a digital data stream, since each copy may have been affected by a unique IQ-imbalance component.

In addition to the different possibilites regarding the starting point and end point of the parallel processing, there are different alternatives regarding how to produce delay estimates for the despreading units and channel estimates to use in the combiner.

As is commonly known, delay estimates from the digitized signals at D are needed in the processing performed in despreading units such as 126a and 126b. In variants of the receiver according to Fig. 3, it would be possible to perform the delay estimation in at least three different ways. Firstly, the delays may be estimated on the basis of only one of the digitized streams. These delay estimates may then be used by both despreading units. Secondly, the delays may be estimated separately for each digitized stream and then used by the corresponding despreading unit. Finally, the delays may be estimated using both digitized streams to be used by both despreading units.

Further, combiners use so called combining weights for weighting the combination of the different input fingers. The combining weights are based upon channel estimates. In a similar way as when producing the delays estimates, there are at least three ways of obtaining these channel estimates, i.e. the channel estimates may be estimated on the basis of only one of the digitized streams and be used by both combiners, or the channel estimates may be estimated separately for each digitized stream and then used by the corresponding combiner, or, finally, the channel estimates may be derived using both digitized streams to be used by both combiners.

Further with reference to Fig. 3, it may be noted that the embodiments of the present invention are equally applicable to e.g. a receiver operating according to the Long Term Evolution (LTE) track of the 3GPP standardization. In such a receiver, the despreading unit 126 and the combiner 128 in Fig. 3 would be replaced with a FFT (Fast Fourier Transform) unit.

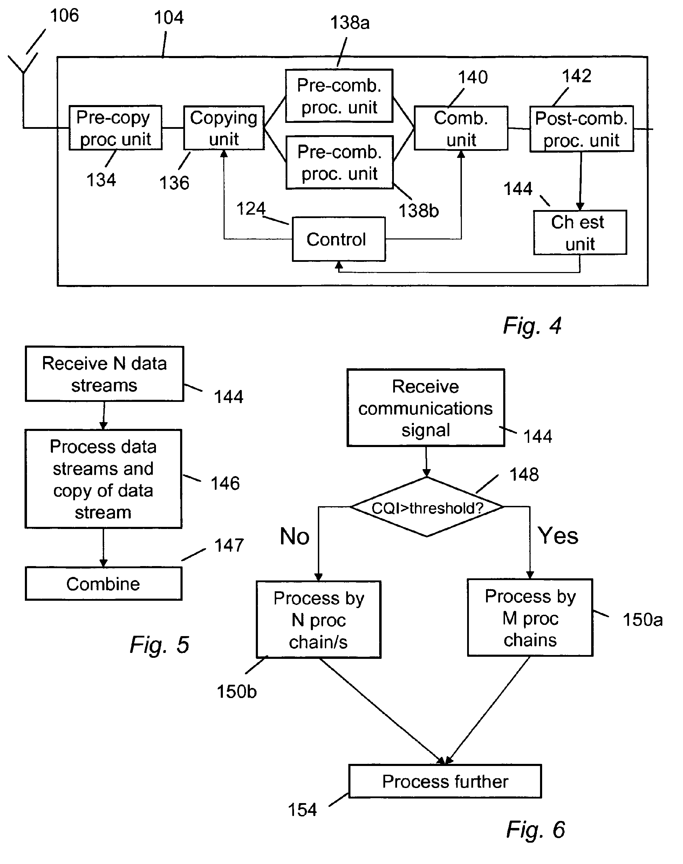

In Fig 4 another schematic view of a receiver according to embodiments of the invention is shown. To emphasize the fact that the parallel processing may take place in different parts of the receiver, the receiver is organised in a pre-copying processing unit 134, a copying unit 136, pre-combining processing units 138a and 138b, a combining unit 140 and a post-combining unit 142. In this context, the term copying means e.g. directing a signal or data stream to a number of parallel units. Each of these units may perform one or more of the functions of a unit in a WCDMA or LTE receiver in accordance with the above discussion. It may even be that no function is performed by for instance the pre-copying processing unit, as would be the case when the signal is fed to the parallel processing chains directly when received from the antenna.

In more detail, a communications signal is received by N antennas 106 - in Fig 4 N equals one - as N first data streams that are fed to the pre-copying processing unit 134, if such is present. The copying unit 136 feeds data to the M pre-combining processing units 138a and 138b - M>N and in Fig. 4 M=2 - where M second data streams are produced. These are then fed to the combining unit 140 where they are combined and then possibly further processed in the post-combining processing unit 142.

The operation of the combining unit 140 and optionally the copying unit 136 may be controlled by the control unit 124. As described above, the control unit 124 may receive input regarding the type of service and may also or as an alternative receive information about the channel quality, e.g. in the form of CQI-values reflecting the input SNR, from a channel estimation unit 144, which operates in a conventional manner. This input can be used to control the combining unit 140 and the copying unit 136.

In other words, the control unit 124 may control the number and allocation of receiver chains, or different parts, such as analog or digital parts, of the receiver chains, to the data streams from the N antennas. E.g. in a case where three receiver chains are available for two antennas, the control unit may decide to allocate only one chain per data stream or three parallel chains to one of the data streams and none to the other and so on and so forth. The control unit 124 may control what type of processing should take place in the parallel parts of the receiver chains, i.e. in the pre-combining processing units 138a and 138b. The type of processing could e.g. be any of those mentioned herein such as analog filtering, AD-conversion, digital baseband processing etc.

The channel estimation unit 144 also provides input to other parts of the receiver in a conventional manner. This is not shown in the figure for sake of clarity.

As was previously described, the control unit 124 may control whether to use parallel processing or not based on the channel quality as reflected by the CQI-values. In a case where more than two parallel processing chains are available, it may decide to use parallel processing by all or some of the processing chains. In Fig. 4 this would be reflected by the number of pre-combining processing units.

It may also be the case that the receiver has more than one antenna, and then the number of parallel processing chains available for at least part of the processing by the receiver is at least one more than the number of antennas. I.e. in Fig. 4 the number of available pre-combining processing units is larger than the number of antennas used for receiving.

Additionally, the control unit 124 may control what parts of the receiver chains should participate in the parallel processing. One way of describing this is that the control unit 124 controls where the copying unit 136 and the combining unit 140 are placed in the receiver processing chain. An alternative way of describing it is that the control unit 124 controls which parts of the receiver processing chain, or which units in the receiver, that are part of the pre-copying processing unit 134, the pre-combining processing units 138a and 138b and the post-combining processing unit 142. Note that this may be changed over time based e.g. on the current radio scenario, channel quality or the type of service.

When relating Fig. 4 to the previous description of Fig. 3, it will become apparent that the pre-copying processing unit 134 in each described case comprises the units of Fig. 3 that are described as being placed before the starting point of the parallel processing. At the point where the parallel processing begins, the copying unit 136 is placed. The pre-combining processing units 138a and 138b (and possible further pre-combining processing units parallel to these) then each comprise such units that in each case take part in the parallel processing chain. At the end point for the parallel processing, the combining unit 140 is placed, and any units that are described as taking part in the processing downstream of the combining are comprised in the post-combining processing unit 142. In this context it may be noted that the different units in the receiver such as the front end receiver, the analog filter, the AD converter, etc would be present in the same order as in a prior art receiver; the pre-copying processing unit, the precombining processing units, etc are merely a way of illustrating concepts of embodiments of the invention.

Now, referring to Fig. 5, a method according to embodiments of the invention is illustrated. In step 144 a communications signal is received by N antennas - in the case described in relation to Figs 2-4 the number N is equal to one - and N first data streams are produced. These are processed in step 146 in such a way that at least one copy of at least one of the N first data streams is processed in parallel with the processing of the N first data streams. The second data streams resulting from the at least one copy and its or their respective "original" data stream(s) are combined in step 147.

With reference to Fig. 6, in a case when a control unit is used, it is tested in step 148 if an estimate of channel quality, such as the input SNR, in this case in the form of a Channel Quality Indicator (CQI) value, is higher or lower than a threshold value. If the CQI-value is higher than the threshold value the right path denoted Yes is taken and a number M, M>N, of parallel processing chains are used in step 150a for the processing of the received signal. If not, the left path denoted No is taken and a lower number of processing chains are used in step 150b for the processing of the signal. In the context of Figs 2-4 example cases, this means that only a single processing chain is used.

Embodiments of the present invention are e.g. useful in the case when a reciever due to multiple carrier requirements is equipped with at least partly parallel Rx chains for receiving and processing multiple carrier data streams, but due to decisions taken at a system level, i.e. somewhere in the network such as at the base station or at a radio network controller (RNC), the particular receiver is sometimes scheduled only for single-carrier downlink traffic. The single-carrier downlink can then be processed by these at least two parallel Rx chains. This means that noise introduced in the receiver can be suppressed by combining the at least two parallel Rx chains at some certain stage.

Another case is when a so called low end terminal, i.e. a terminal in the lower price range having a limited number of features, and having only one Rx antenna per frequency band is equipped with at least partly parallel Rx chains for receiving and processing multiple Rx antenna signals, this due to using mass produced RF and baseband chips that are capable of Rx diversity. In this case the single antenna Rx signal is processed by said at least two parallel Rx chains. In this case too, noise introduced in the receiver can be suppressed by combining the at least two parallel Rx chains at some certain stage.

The gain is especially seen for high geometries, i.e. high SNR into the antenna, where the RF impairments significantly contribute to the total noise. It is estimated that the cost for the hardware changes needed would be marginal and that the cost for new software and testing may be negligible for mass production receivers.

Although reference is here made to a receiver in a terminal or user equipment (UE), it should be noted that the methods and apparatus described may be used at any telecommunications receiver, i.e. in a mobile station or a base station, and the transmission may be uplink or downlink.

Thus, the embodiments disclosed herein are merely illustrative and should not be considered restrictive in any way. The scope of the invention is given by the appended claims, rather than the preceding description, and all variations which fall within the range of the claims are intended to be embraced therein.

## Claims

1. A method of receiving and processing a communications signal in a mobile communications system, comprising
• receiving (144) the communications signal by N antennas (106) to produce N first data streams, N > = 1,
• processing (146) the N first data streams to produce at least N second data streams, each of the N first data streams being processed in a signal processing chain comprising a front end receiver (114a), an analog filter (116a), an analog-to-digital converter (118a), a Fast Fourier Transform unit or a despreading unit (126a) and a combiner (128a), a detector (130a), and a decoder (132a),
**characterized by**
creating at least one copy of at least one of the N first data streams, and
• processing the at least one copy of at least one of the N first data streams, in parallel to the processing of the N first data streams, to produce at least one additional second data stream, said parallel processing comprising processing in at least one of a front end receiver (114b), an analog filter (116b), an analog-to-digital converter (118b), a Fast Fourier Transform unit or a despreading unit (126b) and a combiner (128b), a detector (130b), and a decoder (132b), and
• combining (147) the at least one additional second data stream with the respective second data stream produced by the processing of the at least one of the N first data streams by a combining unit (140).

2. The method of claim 1, wherein the processing of the N first data streams and the at least one copy comprises analog processing.

3. The method of claim 1 or 2, wherein the processing of the N first data streams and the at least one copy comprises digital baseband processing.

4. The method of any of the above claims, further comprising controlling allocation of M, M>N, parallel processing units (138a, 138b) before the combining unit (140) to the processing of the N first data streams and the at least one copy.

5. The method of claim 4, further comprising controlling at least one of the allocation of the M parallel processing units (138a, 138b) before the combining unit (140) and the type of processing that takes place in each of the M parallel processing unit (138a, 138b) on the basis of at least one of an estimate of channel quality and information regarding type of service.

6. The method of any one of claims 1 to 5, comprising
processing the N first data streams by N processing units before the combining unit (140) if an estimate of channel quality is below a threshold value, and
processing the N first data streams by M processing units before the combining unit (140), wherein M>N, if the estimate of channel quality is above a threshold value.

7. A mobile communications receiver, adapted to receive N first data streams from N antennas (106), N > = 1, having
N signal processing chains for processing the N data streams to produce at least N second data streams, each signal processing chain comprising a front end receiver (114a), an analog filter (116a), an analog-to-digital converter (118a), a Fast Fourier Transform unit or a despreading unit (126a) and a combiner (128a), a detector (130a), and a decoder (132a),
**characterized by** having
a copying unit adapted to create at least one copy of at least one of the N first data streams,
• at least one additional signal processing chain adapted to process the at least one copy of at least one of the N data streams, in parallel to the processing of the N first data streams, to produce at least one additional second data stream, said additional signal processing chain comprising at least one of a front end receiver (114b), an analog filter (116b), an analog-to-digital converter (118b), a Fast Fourier Transform unit or a despreading unit (126b) and a combiner (128b), a detector (130b), and a decoder (132b),
• a combining unit (140) adapted to combine the at least one additional second data stream with the respective second data stream produced by the processing of the at least one of the N first data streams.

8. The receiver of claim 7, wherein the signal processing chains are adapted to perform analog processing.

9. The receiver of claim 7 or 8, wherein the signal processing chains are adapted to perform digital baseband processing.

10. The receiver of any of claims 7-9, further comprising M, M>N, parallel processing units (138a, 138b) before the combining unit, and a control unit (124) adapted to control the allocation of the M parallel processing units (138a, 138b) to the N first data streams and the at least one copy of at least one of the N first data streams.

11. The receiver of claim 10, wherein the control unit (124) is adapted to use at least one of an estimate of a channel quality and information regarding type of service as input for controlling at least one of the allocation of the M parallel processing units (138a, 138b) and the type of processing that takes place in each of the M parallel processing units (138a, 138b).

12. The receiver of any one of claims 7 to 11, the receiver comprising M parallel processing units wherein M>N,
a control unit (124) adapted to use an estimate of channel quality to control processing of the N first data streams so that
M parallel processing units are used for processing the N data streams if an estimate of channel quality is above a threshold value, and
N of the M parallel processing units are used for processing the N data streams if the estimate of channel quality is below a threshold value.

## Patentansprüche

1. Verfahren zum Empfangen und Bearbeiten eines Kommunikationssignals in einem mobilen Kommunikationssystem, umfassend
• Empfangen (144) des Kommunikationssignals durch N Antennen (106), um N erste Datenströme, N>=1, zu produzieren,
• Bearbeiten (146) der N ersten Datenströme, um mindestens N zweite Datenströme zu produzieren, wobei jeder der N ersten Datenströme in einer Signalbearbeitungskette bearbeitet wird, die einen Front-End-Empfänger (114a), ein analoges Filter (116a), einen Analog-digital-Wandler (118a), eine schnelle Fourier Transformationseinheit oder eine Entspreizungseinheit (126a) und einen Kombinator (128a), einen Detektor (130a) und einen Decoder (132a) umfasst,
**gekennzeichnet durch**
• Erstellen mindestens einer Kopie von zumindest einem der N ersten Datenströme und Bearbeiten der mindestens einen Kopie von zumindest einem der N ersten Datenströme, parallel zur Bearbeitung der N ersten Datenströme, um zumindest einen zusätzlichen zweiten Datenstrom zu produzieren, wobei die parallele Bearbeitung das Bearbeiten in mindestens einem von einem Front-End-Empfänger (114b), einem analogen Filter (116b), einem analog-digital-Wandler (118b), einer schnellen Fourier Transformationseinheit oder einer Entspreizungseinheit (126b) und einem Kombinator (128b), einem Detektor (130b) und einem Decoder (132b) umfasst, und
• Kombinieren (147) des mindestens einen zusätzlichen zweiten Datenstroms mit dem jeweiligen zweiten Datenstrom, der **durch** das Bearbeiten des mindestens einen der N ersten Datenströme produziert wurde, **durch** eine Kombinierungseinheit (140).

2. Verfahren nach Anspruch 1, wobei das Bearbeiten der N ersten Datenströme und der mindestens einen Kopie analoges Bearbeiten umfasst.

3. Verfahren nach Anspruch 1 oder 2, wobei das Bearbeiten der N ersten Datenströme und der mindestens einen Kopie digitales Basisbandbearbeiten umfasst.

4. Verfahren nach einem der vorstehenden Ansprüche, weiter umfassend Kontrollieren der Zuteilung von M, M>N, parallelen Bearbeitungseinheiten (138a, 138b) vor der Kombinierungseinheit (140) an das Bearbeiten der N ersten Datenströme und der mindestens einen Kopie.

5. Verfahren nach Anspruch 4, weiter umfassend Kontrollieren zumindest einer von der Zuteilung der M parallelen Bearbeitungseinheiten (138a, 138b) vor der Kombinierungseinheit (140) und der Art von Bearbeitung, die in jeder der M parallelen Bearbeitungseinheiten (138a, 138b) stattfindet, auf Basis von zumindest einer von einer Schätzung von Kanalqualität und Information hinsichtlich der Art von Leistung.

6. Verfahren nach einem der Ansprüche 1 bis 5, umfassend Bearbeiten der N ersten Datenströme durch N Bearbeitungseinheiten vor der Kombinierungseinheit (140), wenn eine Schätzung von Kanalqualität unter einem Schwellenwert ist, und
Bearbeiten der N ersten Datenströme durch M Bearbeitungseinheiten vor der Kombinierungseinheit (140), wobei M>N, wenn die Schätzung von Kanalqualität über einem Schwellenwert ist.

7. Mobiler Kommunikationsempfänger, der eingerichtet ist, um N erste Datenströme von N Antennen (106), N>=1, zu empfangen, aufweisend N Signalbearbeitungsketten zum Bearbeiten der N Datenströme, um mindestens N zweite Datenströme zu produzieren, wobei jede Signalbearbeitungskette einen Front-End-Empfänger (114a), ein analoges Filter (116a), einen Analog-digital-Wandler (118a), eine schnelle Fourier Transformationseinheit oder eine Entspreizungseinheit (126a) und einen Kombinator (128a), einen Detektor (130a) und einen Decoder (132a) umfasst, **gekennzeichnet durch** Folgendes aufzuweisen
• eine Kopierungseinheit, die eingerichtet ist, um mindestens eine Kopie von zumindest einem der N ersten Datenströme zu erstellen, mindestens eine zusätzliche Signalbearbeitungskette, die eingerichtet ist, um mindestens eine Kopie von zumindest einem der N ersten Datenströme zu bearbeiten, parallel zur Bearbeitung der N ersten Datenströme, zumindest einen zusätzlichen zweiten Datenstrom zu produzieren, wobei die zusätzliche Signalbearbeitungskette mindestens einen von einem Front-End-Empfänger (114b), einem analogen Filter (116b), einem analog-digital-Wandler (118b), einer schnellen Fourier Transformationseinheit oder einer Entspreizungseinheit (126b) und einem Kombinator (128b), einem Detektor (130b) und einem Decoder (132b) umfasst,
• eine Kombinierungseinheit (140), die eingerichtet ist, um den mindestens einen zusätzlichen zweiten Datenstrom mit dem jeweiligen zweiten Datenstrom, der **durch** das Bearbeiten des mindestens einen der N ersten Datenströme produziert wurde, zu kombinieren.

8. Empfänger nach Anspruch 7, wobei die Signalbearbeitungsketten eingerichtet sind, um analoges Bearbeiten auszuführen.

9. Empfänger nach Anspruch 7 oder 8, wobei die Signalbearbeitungsketten eingerichtet sind, um digitales Basisbandbearbeiten auszuführen.

10. Empfänger nach einem der Ansprüche 7-9, weiter umfassend M, M>N, parallele Bearbeitungseinheiten (138a, 138b) vor der Kombinierungseinheit und eine Kontrolleinheit (124), die eingerichtet ist, um die Zuteilung von den M parallelen Bearbeitungseinheiten (138a, 138b) an die N ersten Datenströme und die mindestens eine Kopie von zumindest einem der N ersten Datenströme zu kontrollieren.

11. Empfänger nach Anspruch 10, wobei die Kontrolleinheit (124) eingerichtet ist, um mindestens eine von einer Schätzung von Kanalqualität und Information hinsichtlich der Art von Leistung als Input zum Kontrollieren mindestens einer von Zuteilung von den M parallelen Bearbeitungseinheiten (138a, 138b) und der Art von Bearbeitung, die in jeder der M parallelen Bearbeitungseinheiten (138a, 138b) stattfindet, anzuwenden.

12. Empfänger nach einem der Ansprüche 7 bis 11, welcher Empfänger Folgendes umfasst
M parallele Bearbeitungseinheiten, wobei M>N,
eine Kontrolleinheit (124), die eingerichtet ist, um eine Schätzung von Kanalqualität anzuwenden, um Bearbeitung von den N ersten Datenströmen zu kontrollieren, so dass
M parallele Bearbeitungseinheiten zum Bearbeiten der N Datenströme angewendet werden, wenn eine Schätzung von Kanalqualität über einem Schwellenwert ist, und
N von den M parallelen Bearbeitungseinheiten zum Bearbeiten der N Datenströme angewendet werden, wenn die Schätzung von Kanalqualität unter einem Schwellenwert ist.

## Revendications

1. Procédé de réception et de traitement d'un signal de communication dans un système de communication mobile, comprenant
• la réception (144) du signal de communication par N antennes (106) pour produire N premiers flux de données, N>=1,
• le traitement (146) des N premiers flux de données pour produire au moins N deuxièmes flux de données, chacun des N premiers flux de données étant traité dans une chaîne de traitement de signaux comprenant un récepteur frontal (114a), un filtre analogue (116a), un convertisseur analogique-numérique (118a), une unité de transformée de Fourier rapide ou une unité de désétalement (126a) et un combinateur (128a), un détecteur (130a) et un décodeur (132a),
**caractérisé par**
• la création d'au moins une copie d'au moins l'un des N premiers flux de données, et le traitement de l'au moins une copie d'au moins l'un des N premiers flux de données, en parallèle avec le traitement des N premiers flux de données, pour produire au moins un deuxième flux de données supplémentaire, ledit traitement en parallèle comprenant le traitement dans au moins l'un d'un récepteur frontal (114b), d'un filtre analogue (116b), d'un convertisseur analogique-numérique (118b), d'une unité de transformée de Fourier rapide ou d'une unité de désétalement (126b) et d'un combinateur (128a), d'un détecteur (130b) et d'un décodeur (132b), et
• la combinaison (147) de l'au moins un deuxième flux de données supplémentaire dans le deuxième flux de données respectif produit par le traitement de l'au moins un des N premiers flux de données par une unité de combinaison (140).

2. Procédé selon la revendication 1, dans lequel le traitement des N premiers flux de données et de l'au moins une copie comprend un traitement analogique.

3. Procédé selon la revendication 1 ou 2, dans lequel le traitement des N premiers flux de données et de l'au moins une copie comprend un traitement numérique en bande de base.

4. Procédé selon l'une quelconque des revendications précédentes, comprenant en outre la commande de l'allocation de M, M>N, unités de traitement en parallèle (138a, 138b) avant l'unité de combinaison (140) pour le traitement des N premiers flux de données et de l'au moins une copie.

5. Procédé selon la revendication 4, comprenant en outre la commande d'au moins l'une de l'allocation des M unités de traitement en parallèle (138a, 138b) avant l'unité de combinaison (140) et le type de traitement qui a lieu dans chacune des M unités de traitement en parallèle (138a, 138b) sur la base d'au moins l'une d'une estimation de la qualité du canal et d'une information concernant le type de service.

6. Procédé selon l'une quelconque des revendications 1 à 5, comprenant le traitement des N premiers flux de données par des N unités de traitement avant l'unité de combinaison (140) si une estimation de la qualité du canal est inférieure à une valeur de seuil, et
le traitement des N premiers flux de données par des N unités de traitement avant l'unité de combinaison (140), dans lequel M>N, si une estimation de la qualité du canal est supérieure à une valeur de seuil.

7. Récepteur de communication mobile, destiné à recevoir des N premiers flux de données à partir de N antennes (106), N>=1, présentant des N chaînes de traitement de signaux pour traiter les N flux de données pour produire au moins N deuxièmes flux de données, chaque chaîne de traitement de signaux comprenant un récepteur frontal (114a), un filtre analogue (116a), un convertisseur analogique-numérique (118a), une unité de transformée de Fourier rapide ou une unité de désétalement (126a) et un combinateur (128a), un détecteur (130a) et un décodeur (132a), **caractérisé en ce qu'**il comprend
• une unité de copiage destinée à créer au moins une copie d'au moins l'un des N premiers flux de données, au moins une chaîne de traitement de signaux supplémentaire destinée à traiter l'au moins une copie d'au moins l'un des N flux de données, en parallèle avec le traitement des N premiers flux de données, pour produire au moins un deuxième flux de données supplémentaire, ladite chaîne de traitement de signaux supplémentaire comprenant au moins l'un d'un récepteur frontal (114b), d'un filtre analogue (116b), d'un convertisseur analogique-numérique (118b), d'une unité de transformée de Fourier rapide ou d'une unité de désétalement (126b) et d'un combinateur (128b), d'un détecteur (130b) et d'un décodeur (132b), et
• une unité de combinaison (140) destinée à combiner de l'au moins un deuxième flux de données supplémentaire avec le deuxième flux de données respectif produit par le traitement de l'au moins un des N premiers flux de données.

8. Récepteur selon la revendication 7, dans lequel les chaînes de traitement de signaux sont adaptées pour effectuer le traitement analogique.

9. Récepteur selon la revendication 7 ou 8, dans lequel les chaînes de traitement de signaux sont adaptées pour effectuer le traitement numérique en bande de base.

10. Récepteur selon l'une quelconque des revendications 7 à 9, comprenant en outre des M, M>N, unités de traitement en parallèle (138a, 138b) avant l'unité de combinaison, et une unité de commande (124) destinée à commander l'allocation des M unités de traitement en parallèle (138a, 138b) aux N premiers flux de données et à l'au moins une copie d'au moins l'un des N premiers flux de données.

11. Récepteur selon la revendication 10, dans lequel l'unité de commande (124) est destinée à utiliser au moins l'une d'une estimation de la qualité du canal et d'une information concernant le type de service en tant qu'entrée de commande d'au moins l'un de l'allocation des M unités de traitement en parallèle (138a, 138b) et du type de traitement qui a lieu dans chacune des M unités de traitement en parallèle (138a, 138b).

12. Récepteur selon l'une quelconque des revendications 7 à 11, le récepteur comprenant
des M unités de traitement en parallèle, où M>N,
une unité de commande (124) destinée à utiliser une estimation de la qualité du canal pour commander le traitement des N premiers flux de données si bien que
des M unités de traitement en parallèle sont utilisées pour traiter les N flux de données si une estimation de la qualité du canal est supérieure à une valeur de seuil, et
N des M unités de traitement en parallèle sont utilisées pour traiter les N flux de données si une estimation de la qualité du canal est inférieure à une valeur de seuil.
